# EUROPEAN PATENT APPLICATION

(11) **EP 4 046 874 A1**
(43) Date of publication of application: **24.08.2022**
(21) Application number: 20888243.1
(22) Date of filing: 28.10.2020
(51) Int. Cl.: B60R 11/02, B60J 1/00

(54) **GLASS WINDOW EQUIPPED WITH BRACKET**

(30) Priority: 14.11.2019 JP 2019205892
(71) Applicant: Central Glass Company, Limited, Ube-shi, Yamaguchi 755-0001 (JP)
(72) Inventor: TSUJI, Atsushi, Tokyo 101-0054 (JP); OGURA, Takashi, Tokyo 101-0054 (JP)
(74) Representative: Manitz Finsterwald Patent- und Rechtsanwaltspartnerschaft mbB
(86) International application number: PCT/JP2020/040424
(87) International publication number: WO 2021/095529

(57) **Abstract**

A bracket (3) is formed in the shape of a rectangular cross-section tube, and has a first opening portion (4) joined to a vehicle cabin interior-side surface (la) of a windshield (1). A second opening portion (5) is formed in a stair-like shape and is opened toward the vehicle interior side. Guide rails (24A, 24B) are provided at height positions along front-back-direction edges (5f, 5g), and hold plate members (6A, 6B) thereon. Electronic devices (18A, 18B, 18C) such as a camera are disposed in device housing spaces (14, 15, 16) partitioned by plate members (6A, 6B). Accordingly, it is possible to gather and arrange a plurality of electronic devices (18) in the bracket (3).

## Description

### TECHNICAL FIELD

The present disclosure relates to a glass window equipped with a bracket for a vehicle which is equipped with a bracket on which an electronic device such as a camera is selectively mounted, a manufacturing method for the same, and the bracket.

### BACKGROUND TECHNOLOGY

In patent documents 1 and 2, it is disclosed that an electronic device such as a camera is arranged on the inner side surface on the upper side of a glass window of a vehicle, such as a windshield. As electronic devices, in addition to a camera for monitoring the front area and surrounding area of a vehicle, a radar and an infrared laser for detecting obstacles are sited, and these electronic devices are attached to a glass window via a bracket fixed to the glass surface.

Recently, a so-called drive recorder for recording, as image, the conditions of the front area and surrounding area of a vehicle during traveling, safety technology for operating an emergency brake in case of an emergency in which an obstacle is detected, and automatic traveling technology for carrying out tracking traveling by recognizing a white line of the road or a vehicle traveling ahead have been developed, and, in association with this, various kinds of electronic devices tend to be mounted on a vehicle. However, when a plurality of electronic devices are attached to a glass window, due to it, an area occupied by a bracket and the electronic devices becomes large, and the visual field of a driver or occupant is obstructed, and it is therefore not preferable.

In addition, in case where an equipment for the above-mentioned automatic traveling technology is provided as a so-called option equipment, there is case where electronic devices whose kinds are different or a plurality of electronic devices in different combinations in each vehicle are attached even if the vehicle type is the same, and it becomes further difficult to secure the installation area for the electronic devices in the glass window.

### PRIOR ART DOCUMENT(S)

### PATENT DOCUMENT(S)

Patent Document 1: International Publication No. 2017/188412
Patent Document 2: Japanese Patent Application Publication No. 2017-114470

### SUMMARY OF THE INVENTION

According to the present disclosure, there is provided a glass window equipped with a bracket, including: a glass window for a vehicle; a cylindrical bracket held by the glass window; and a plate member held by the bracket, wherein the bracket includes: a first opening portion covered with a vehicle cabin interior-side surface of the glass window for the vehicle; a second opening portion opened such that the plate member can be inserted and drawn out, on the opposite side of the first opening portion; and a pair of side surface side inner walls, and wherein the plate member is held by a pair of the side surface side inner walls so as to partition an internal space of the bracket into upper side and lower side device housing spaces.

Moreover, there is provided a method for manufacturing a glass window equipped with a bracket, including the steps of: producing a glass window for a vehicle; producing a cylindrical bracket having a first opening portion and a second opening portion at respective end portions thereof and a pair of side surface side inner walls; joining the first opening portion of the bracket to a vehicle cabin interior-side surface of the glass window for the vehicle, and providing the glass window equipped with the bracket; attaching the glass window equipped with the bracket to a vehicle body; and inserting a plate member mounting an electronic device into the bracket from the second opening portion, and holding the plate member by a pair of the side surface side inner walls.

Arbitrary kinds of a plurality of electronic devices can be housed in the bracket, and various kinds of electronic devices can be attached in a state of being gathered in one place in a limited area of the glass window. In addition, the attachment and detachment of the electronic devices can be carried out afterward to the bracket which have been attached to the glass window in advance, and thereby it is possible to easily cope with various combinations of a plurality of kinds of electronic devices.

### BRIEF DESCRIPTION OF THE DRAWINGS

FIG. 1 is a front view of a vehicle provided with a windshield equipped with a bracket in one embodiment.
FIG. 2 is a perspective view when viewing a bracket in a first embodiment from the vehicle cabin interior side.
FIG. 3 is a front view of a second opening portion of the bracket in the first embodiment.
FIG. 4 is a sectional view showing the bracket in the first embodiment, together with the windshield.
FIG. 5 is a perspective view when viewing a bracket in a second embodiment from the vehicle cabin interior side.
FIG. 6 is a front view of a second opening portion of the bracket in the second embodiment.
FIG. 7 is a sectional view showing the bracket in the second embodiment, together with the windshield.
FIG. 8 is a perspective view when viewing a bracket in a third embodiment from the vehicle cabin interior side.
FIG. 9 is a front view of a second opening portion of the bracket in the third embodiment.
FIG. 10 is a sectional view showing the bracket in the third embodiment, together with the windshield.
FIG. 11 is a perspective view when viewing a bracket in a fourth embodiment from the vehicle cabin interior side.
FIG. 12 is a front view of a second opening portion of the bracket in the fourth embodiment.
FIG. 13 is a sectional view showing the bracket in the fourth embodiment, together with the windshield.
FIG. 14 is a perspective view when viewing a bracket in a fifth embodiment from the vehicle cabin interior side.
FIG. 15 is a front view of a second opening portion of the bracket in the fifth embodiment.
FIG. 16 is a sectional view showing the bracket in the fifth embodiment, together with the windshield.
FIG. 17 is a perspective view when viewing a bracket in a sixth embodiment from the vehicle cabin interior side.
FIG. 18 is a front view of a second opening portion of the bracket in the sixth embodiment.
FIG. 19 is a sectional view showing the bracket in the sixth embodiment, together with the windshield.
FIG. 20 is a perspective view of a windshield equipped with a bracket in a seventh embodiment.
FIG. 21 is a perspective view when viewing the bracket in the seventh embodiment from the vehicle cabin exterior side.
FIG. 22 is a perspective view when viewing the bracket in the seventh embodiment from the vehicle cabin interior side.
FIG. 23 is a perspective view of the cross section of the bracket in the seventh embodiment.
FIG. 24 is a sectional view showing the bracket in the seventh embodiment, together with the windshield.
FIG. 25 is a sectional view of the bracket in the seventh embodiment, in a state in which a plate member is removed.
FIG. 26 is a perspective exploded view of the bracket in the seventh embodiment.
FIG. 27 is a perspective view when viewing a bracket in an eighth embodiment from the vehicle cabin interior side.
FIG. 28 is a perspective exploded view of the bracket in the eighth embodiment.
FIG. 29 is a front view of a vehicle, showing a variation in which two brackets are equipped.

### MODE FOR IMPLEMENTING THE INVENTION

In the following, one preferable embodiment applied to a windshield as a glass window will be explained in detail based on the drawings.

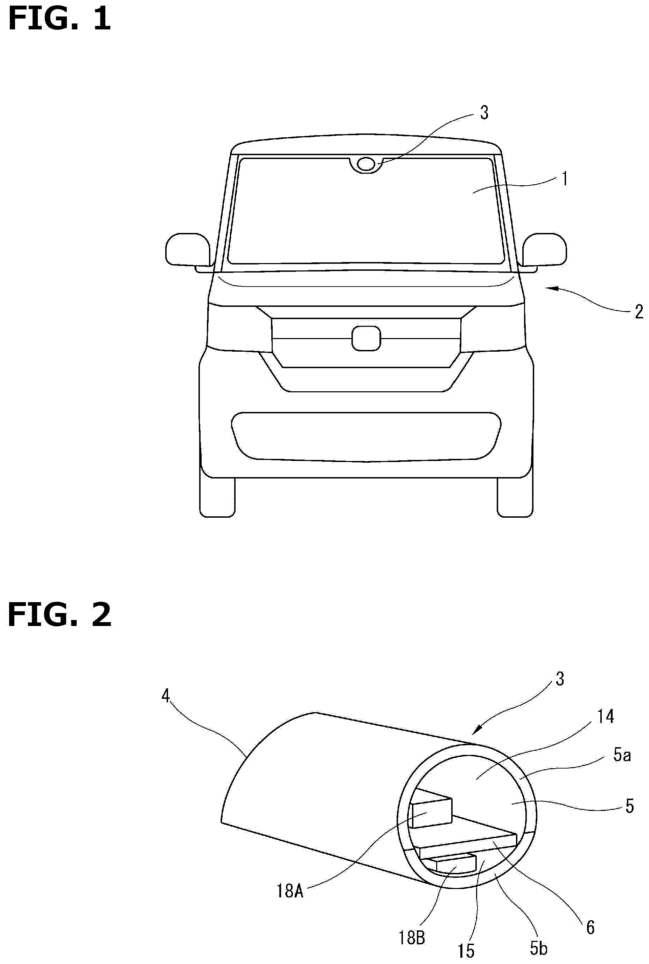

FIG. 1 shows a vehicle, namely, an automobile 2 provided with a windshield 1 equipped with a bracket in one embodiment.

The windshield 1 is attached in the front of a driver's seat of the automobile 2 so as to be obliquely inclined, and is configured as a curved glass gently curved in the right and left direction in general. Although the windshield 1 may be formed of one plate glass, in general, it is formed of a laminated glass in which two plate glasses are laminated via a synthetic resin film arranged in the middle therebetween.

The windshield 1 is equipped with, in the middle of an upper part thereof, a bracket 3 for mounting an electronic device.

FIG. 2 to FIG. 4 each show a bracket 3 in a first embodiment. The bracket 3 in the first embodiment has a cylindrical shape, more specifically, a cylindrical shape having a true circular cross section or an oval cross section, and includes a first opening portion 4 opened toward the vehicle cabin exterior side and a second opening portion 5 opened toward the vehicle cabin interior side.

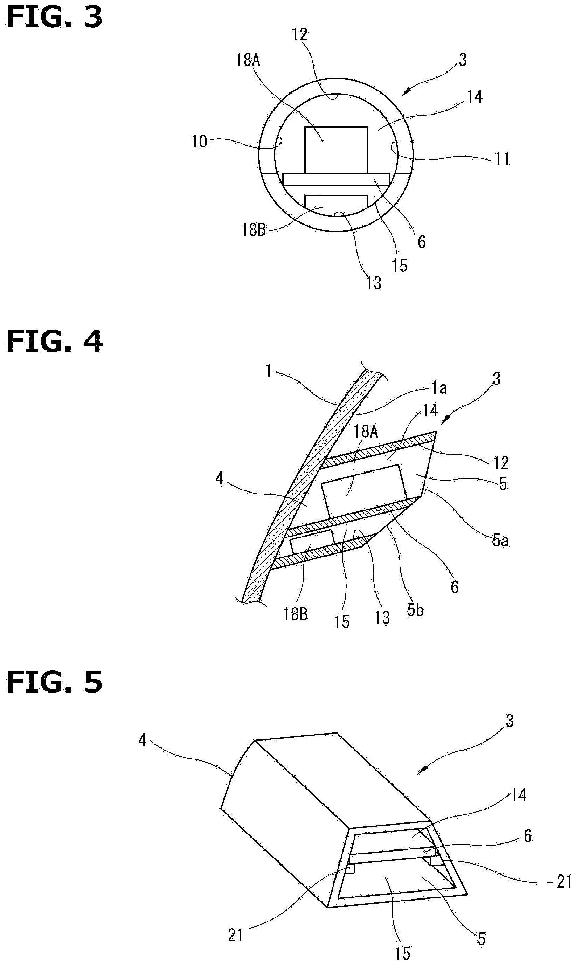

As shown in the sectional view of FIG. 4, the first opening portion 4 has a three-dimensional shape along a vehicle cabin interior-side surface 1a of the windshield 1, and is covered with the vehicle cabin interior-side surface 1a of the windshield 1 in a state in which the bracket 3 is attached to the windshield 1. In contrast to this, the second opening portion 5 opened toward the vehicle cabin interior side that is the opposite side of the first opening portion 4 is opened such that the after-mentioned plate member 6 can be inserted and drawn out.

The cylindrical bracket 3 is made of a synthetic resin or hard rubber having rigidity or a metal, and is held on the windshield 1 in a manner that the opening edge of the first opening portion 4 having a shape along the surface 1a of the windshield 1 is joined to the surface 1a of the windshield 1 via, for example, an adhesive. The joining of the bracket 3 to the surface 1a of the windshield 1 is not limited to an adhesive, and any bonding technique can be used. In a state of being attached to the windshield 1, the cylindrical bracket 3 extends along the substantially parallel direction of a vehicle body.

As shown in FIG. 3, the cylindrical bracket 3 includes a pair of side surface side inner walls 10, 11 positioned on the left and right sides, a top surface side inner wall 12 positioned on the upper side in the vertical direction of the vehicle body, and a bottom surface side inner wall 13 positioned on the lower side in the vertical direction. That is, the upper ends of a pair of the side surface side inner walls 10, 11 are connected to each other by the top surface side inner wall 12, and the lower ends of a pair of the side surface side inner walls 10, 11 are connected to each other by the bottom surface side inner wall 13. In the present embodiment, the side surface side inner walls 10, 11, the top surface side inner wall 12 and the bottom surface side inner wall 13 are continuous so as to have a circular shape as a whole.

In the present embodiment, the plate member 6 has a simple rectangular flat plate shape. The plate member 6 is formed as a member different from the bracket 3, and is made of a synthetic resin or hard rubber having rigidity or a metal. The plate member 6 may be made of the same material as that of the bracket 3, or may be made of a material different from that of the bracket 3.

The plate member 6 has a length that is a dimension along the axial direction of the cylindrical bracket 3 and a width that is a dimension along the radial direction of the bracket 3. The width of the plate member 6 is set to be slightly smaller than the inner diameter (diameter in case of a true circle) along the right and left direction of the bracket 3.

Therefore, as can be easily understood from FIG. 3, the both side edges of the plate member 6 biased downward by its own weight inside the cylindrical bracket 3 come in tight contact with a pair of the right and left side surface side inner walls 10, 11, and the plate member 6 is supported by the side surface side inner walls 10, 11. In particular, since the width of the plate member 6 is slightly smaller than the inner diameter of the bracket 3, as shown in FIG. 3, the bracket 6 is held at a position on the slightly lower side of the center in the vertical direction in the circular cross section of the bracket 3. In addition, although it is not necessary to fix the plate member 6 to the bracket 3, the plate member 6 may be fixed to the bracket 3 with, for example, screws.

In a state in which the plate member 6 is held inside the bracket 3 in this way, the length of the plate member 6 is set so as to match with the dimension in the longitudinal direction of the bracket 3. That is, as shown in FIG. 4, one end of the plate member 6 is positioned along the opening edge of the first opening portion 4 of the bracket 3, and the other end is positioned along the opening edge of the second opening portion 5 of the bracket 3. In a sectional view shown in FIG. 4, the plate member 6 is held in parallel to the top surface side inner wall 12 and the bottom surface side inner wall 13.

In addition, as shown in FIG. 4, the second opening portion 5 of the bracket 3 is formed along an upper-side first inclined surface 5a and a lower-side second inclined surface 5b each inclined with respect to the center axial line of the cylinder. The boundary between the first inclined surface 5a and the second inclined surface 5b is positioned corresponding to the height position at which the plate member 6 is supported. That is, the first inclined surface 5a is positioned more on the upper side than the plate member 6, and the second inclined surface 5b is positioned more on the lower side than the plate member 6. The first inclined surface 5a and the second inclined surface 5b are each inclined in the same direction as that of the inclination of the first opening portion 4, namely, the inclination of the windshield 1, and the inclination of the second inclined surface 5b is larger than that of the first inclined surface 5a.

As mentioned above, the plate member 6 is supported inside the bracket 3, and the internal space of the cylindrical bracket 3 is partitioned into upper and lower side device housing spaces 14, 15. Then, electronic devices 18A, 18B (when there is no necessary to distinguish therebetween, they are collectively referred to as electronic devices 18) are respectively housed in the device housing spaces 14, 15. The electronic device 18A on the upper side is mounted on the upper surface of the plate member 6. The electronic device 18B on the lower side is mounted on the bottom surface side inner wall 13 of the bracket 3.

As the electronic devices 18, any kind of electronic devices such as a camera, a radar, an infrared laser, a communication module and a rain sensor which are preferably arranged in the vicinity of the windshield 1 can be used. For example, in one embodiment, the upper-side electronic device 18A is a camera for imaging the front area of the automobile 2, and the lower-side electronic device 18B is an infrared laser for detecting obstacles. In addition, another combination can be applied.

According to the first embodiment, two electronic devices 18 can be housed in one bracket 3, and consequently, the occupancy area can be reduced and the entire configuration can be simplified. In addition, in the first embodiment, a structure such as a guide rail for guiding the plate member 6 so as to be inserted into the bracket 3 is not necessary, and the configuration of the bracket 3 becomes very simple.

Next, a bracket 3 in a second embodiment will be explained while referring to FIG. 5 to FIG. 7. In the following explanation, the same explanation as the first embodiment will be omitted.

The bracket 3 in the second embodiment is formed in the shape of a rectangular cross-section tube. Specifically, it is formed in a cylindrical shape having a trapezoidal cross section in which the bottom side is wider than the top side. The bracket 3 includes a pair of right and left side surface side inner walls 10, 11, a top surface side inner wall 12 positioned on the upper side in the vertical direction, and a bottom surface side inner wall 13 positioned on the lower side in the vertical direction. That is, the upper ends of a pair of the side surface side inner walls 10, 11 are connected to each other by the top surface side inner wall 12, and the lower ends of a pair of the side surface side inner walls 10, 11 are connected to each other by the bottom surface side inner wall 13. In the present embodiment, the two side surface side inner wall 10, 11 are symmetrical to each other.

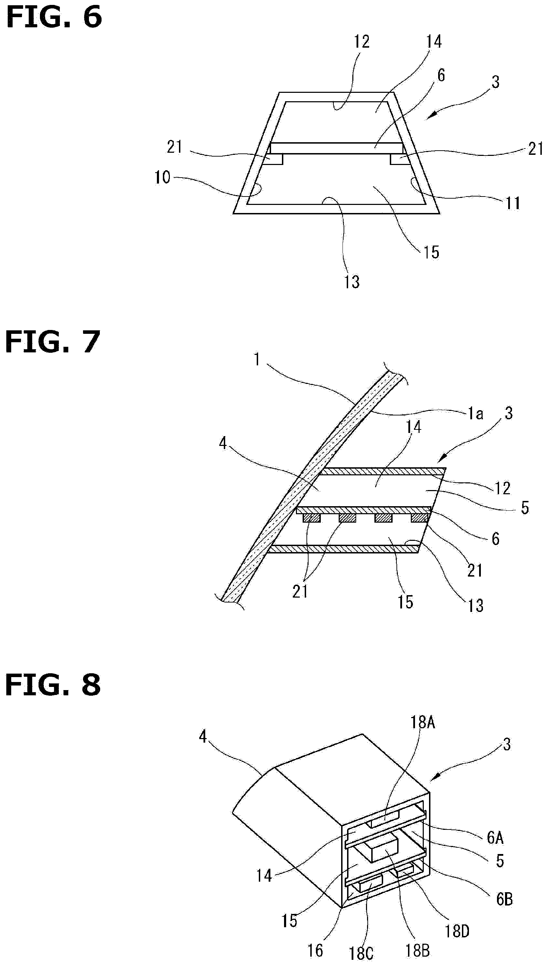

A plurality of guides 21 for holding the plate member 6 are provided at a height position in the vicinity of the middle in the vertical direction of a pair of each of the side surface side inner walls 10, 11 so as to be arranged in straight lines. Each of the guides 21 is formed in a rectangular shape, and, as shown in FIG. 6, the guides 21 of the side surface side inner wall 10 and the guides 21 of the side surface side inner wall 11 protrude inward so as to face each other. In the illustrated example, in each of the side surface side inner walls 10, 11, four guides 21 are provided so as to be arranged in a dotted-line shape.

The plate member 6 is inserted from the second opening portion 5 side along the upper surfaces of a plurality of the guides 21, and is held by a pair of the side surface side inner walls 10, 11. Here, the width of the plate member 6 is set so as to be made as large as possible within a range in which the plate member 6 can be inserted along the upper surfaces of the guides 21 (that is, it is set such that an unnecessary gap is not formed between the plate member 6 and the side surface side inner walls 10, 11). The side surface side inner walls 10, 11 are inclined such that the distance therebetween becomes narrower as it goes upward, and, consequently, the plate member 6 supported on the upper surfaces of a plurality of the guides 21 cannot move upward. In other words, by combining the plate member 6 with the inclined side surface side inner walls 10, 11, the plate member 6 can be surely held in the vertical direction with only the guides 21 supporting the plate member 6 from below.

Although, in the illustrated example, four guides 21 are provided to each of the side surface side inner walls 10, 11, namely, eight guides 21 in total are provided, at least two guides 21 may be provided to each of the side surface side inner walls 10, 11, namely, four guides 21 in total may be provided. In addition, the guides 21 of each of the side surface side inner walls 10, 11 may be formed so as to be continuous over the entire length of the bracket 3. However, in order to reduce the weight of the bracket 3, it is preferable to partially provide the guides 21 as shown in the illustrated example.

As shown in FIG. 7, the length of the plate member 6 is set so as to match with the dimension in the longitudinal direction of the bracket 3. That is, one end of the plate member 6 is positioned along the opening edge of the first opening portion 4 of the bracket 3, and the other end is positioned along the opening edge of the second opening portion 5 of the bracket 3.

The first opening portion 4 of the bracket 3 has a three-dimensional shape along the vehicle cabin interior-side surface 1a of the windshield 1, and is joined to the vehicle cabin interior-side surface 1a of the windshield 1 by using a preferable joining technique. With this, the first opening portion 4 is covered with the vehicle cabin interior-side surface 1a of the windshield 1.

In a state of being attached to the windshield 1, the top surface side inner wall 12 and the bottom surface side inner wall 13 of the bracket 3 extend along the horizontal direction of the vehicle body.

The second opening portion 5 opened toward the vehicle cabin interior side that is the opposite side of the first opening portion 4 is opened such that the plate member 6 can be inserted and drawn out. In addition, the second opening portion 5 is slightly inclined with respect to the vertical direction so as to be inclined in the same inclination direction as that of the windshield 1. In the illustrated example, the opening edge of the second opening portion 5 is inclined along one inclined plane.

As shown in FIG. 7, the plate member 6 is held in parallel to the top surface side inner wall 12 and the bottom surface side inner wall 13.

In this way, by the plate member 6 disposed inside the bracket 3, the internal space of the bracket 3 having a trapezoidal cross section is partitioned into two device housing spaces 14, 15. Then, similar to the first embodiment, electronic devices 18 which are not shown are housed in the respective device housing spaces 14, 15.

Next, a bracket 3 in a third embodiment will be explained while referring to FIG. 8 to FIG. 10. In this embodiment, two plate members 6A, 6B are used.

The bracket 3 in the third embodiment is formed in the shape of a rectangular cross-section tube. Specifically, it is formed in the shape of a square cross-section tube or a substantially square cross-section tube. The bracket 3 includes a pair of right and left side surface side inner walls 10, 11, a top surface side inner wall 12 positioned on the upper side in the vertical direction, and a bottom surface side inner wall 13 positioned on the lower side in the vertical direction. That is, the upper ends of a pair of the side surface side inner walls 10, 11 are connected to each other by the top surface side inner wall 12, and the lower ends of a pair of the side surface side inner walls 10, 11 are connected to each other by the bottom surface side inner wall 13.

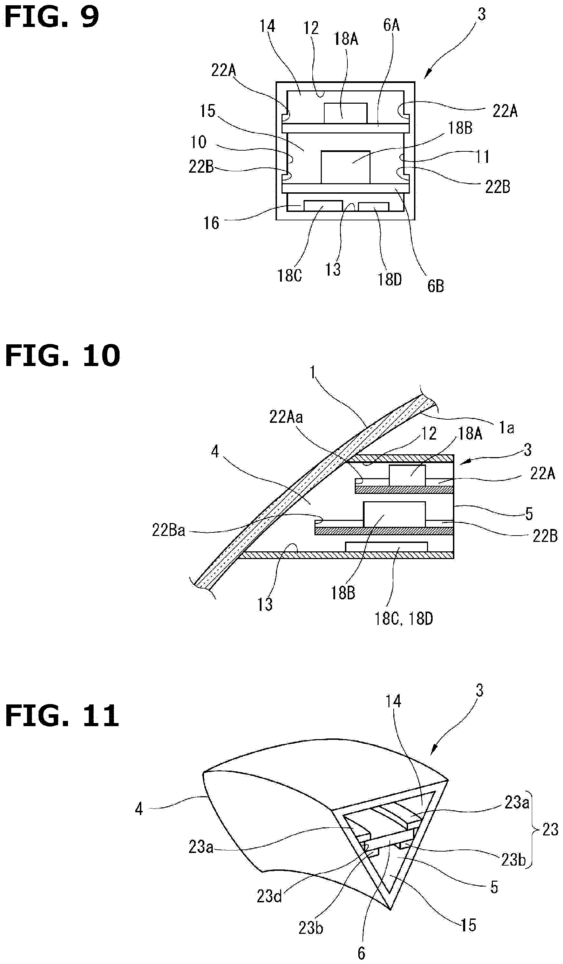

Guide grooves 22A, 22B for holding the plate members 6A, 6B are provided to a pair of each of the side surface side inner walls 10, 11 in straight lines. Each of the guide grooves 22A, 22B is recessed from the surfaces of the side surface side inner walls 10, 11 in a rectangular shape in cross section. As shown in FIG. 9, the guide groove 22A of one side surface side inner wall 10 and the guide groove 22A of the other side surface side inner wall 11 are positioned so as to face each other, and the guide groove 22B of one side surface side inner wall 10 and the guide groove 22B of the other side surface side inner wall 11 are positioned so as to face each other. In the cross section of the bracket 3, the guide grooves 22A are positioned close to the top surface side inner wall 12, and the guide grooves 22B are positioned close to the bottom surface side inner wall 13. That is, the guide grooves 22A are positioned on the relatively upper side with respect to the guide grooves 22B.

In addition, as shown in FIG. 10, the guide grooves 22A, 22B are each arranged in parallel to the top surface side inner wall 12 and the bottom surface side inner wall 13. One ends in the longitudinal direction of the guide grooves 22A, 22B are opened toward the vehicle cabin interior side at the second opening portion 5 of the bracket 3. On the other hand, the other ends in the longitudinal direction of the guide grooves 22A, 22B have closed shapes as terminal portions 22Aa, 22Ba at the positions in the vicinity of the first opening portion 4 of the bracket 3.

The first opening portion 4 of the bracket 3 has a three-dimensional shape inclined along the vehicle cabin interior-side surface 1a of the windshield 1, and is joined to the vehicle cabin interior-side surface 1a of the windshield 1 by using a preferable joining technique. With this, the first opening portion 4 is covered with the vehicle cabin interior-side surface 1a of the windshield 1.

In a state of being attached to the windshield 1, the top surface side inner wall 12 and the bottom surface side inner wall 13 of the bracket 3 extend along the horizontal direction of the vehicle body.

The second opening portion 5 opened toward the vehicle cabin interior side that is the opposite side of the first opening portion 4 is opened such that the plate members 6A, 6B can be inserted and drawn out. In addition, the second opening portion 5 is formed along one plane along the vertical direction of the vehicle body.

With the inclination of the first opening portion 4 of the bracket 3, the terminal portions 22Ba of the guide grooves 22B positioned relatively lower side are positioned more on the front side of the vehicle body than the terminal portions 22Aa of the guide grooves 22A positioned relatively upper side. That is, the length of each of the guide grooves 22A is longer than that of each of the guide grooves 22B.

The plate members 6A, 6B are inserted from the second opening portion 5 side along corresponding ones of the guide grooves 22A, 22B, and are held by a pair of the side surface side inner walls 10, 11. Here, the width of the plate member 6A is equal to that of the plate member 6B. The length of the two plate members 6A, 6B corresponds to that of corresponding ones of the guide grooves 22A, 22B, and consequently, the plate member 6B positioned on the lower side is longer than the plate member 6A positioned on the upper side. The plate members 6A, 6B inserted from the second opening portion 5 side are positioned in the longitudinal direction in a manner that the distal end edges of the plate members 6A, 6B abut on the terminal portions 22Aa, 22Ba of the guide grooves 22A, 22B.

In the third embodiment, the two plate members 6A, 6B are arranged at different height positions in the inside of the bracket 3, and the internal space of the bracket 3 is partitioned into three device housing spaces 14, 15, 16. Then, similar to the first embodiment, electronic devices 18 are housed into the device housing spaces 14, 15, 16. Specifically, an electronic device 18A is housed in the device housing space 14 positioned on the upper side, an electronic device 18B is housed in the device housing space 15 positioned in the middle, and electronic devices 18C, 18D are housed in the device housing space 16 positioned on the lower side. In the lower-side device housing space 16, the two electronic devices 18C, 18D are arranged side by side in the right and left direction. The electronic devices 18A, 18B are respectively mounted on the plate members 6A, 6B, and the electronic devices 18C, 18D are mounted on the bottom surface side inner wall 13 of the bracket 3. Accordingly, in the third embodiment, as compared with the first embodiment, a large number of electronic devices 18 can be held by one bracket 3.

Next, a bracket 3 in a fourth embodiment will be explained while referring to FIG. 11 to FIG. 13.

The bracket 3 in the fourth embodiment is formed in the shape of a triangular cross-section tube. Specifically, it has a cylindrical shape having an isosceles triangular cross section in which the apex is positioned on the lower side in the vertical direction. The bracket 3 includes a pair of right and left side surface side inner walls 10, 11 and a top surface side inner wall 12 positioned on the upper side in the vertical direction. That is, the upper ends of a pair of the side surface side inner walls 10, 11 are connected to each other by the top surface side inner wall 12, and the lower ends of a pair of the side surface side inner walls 10, 11 are connected to each other so as to form the apex of the triangle.

At the position in the vicinity of the middle in the vertical direction of a pair of each of the side surface side inner walls 10, 11, guide rails 23 for holding a plate member 6 are provided so as to face each other. Specifically, each of the guide rails 23 includes an upper rail 23a and a lower rail 23b arranged so as to have a certain clearance, and the upper rail 23a and the lower rail 23b protrude inward from each of the surfaces of the side surface side inner walls 10, 11. Then, grooves 23d for holding the side edges of the plate member 6 are formed between the upper rails 23a and the lower rails 23b, and the grooves 23d are closed at terminal portions 23c on the first opening portion 4 side.

The first opening portion 4 of the bracket 3 has a three-dimensional shape along the vehicle cabin interior-side surface 1a of the windshield 1, and is joined to the vehicle cabin interior-side surface 1a of the windshield 1 by using a preferable joining technique. With this, the first opening portion 4 is covered with the vehicle cabin interior-side surface 1a of the windshield 1.

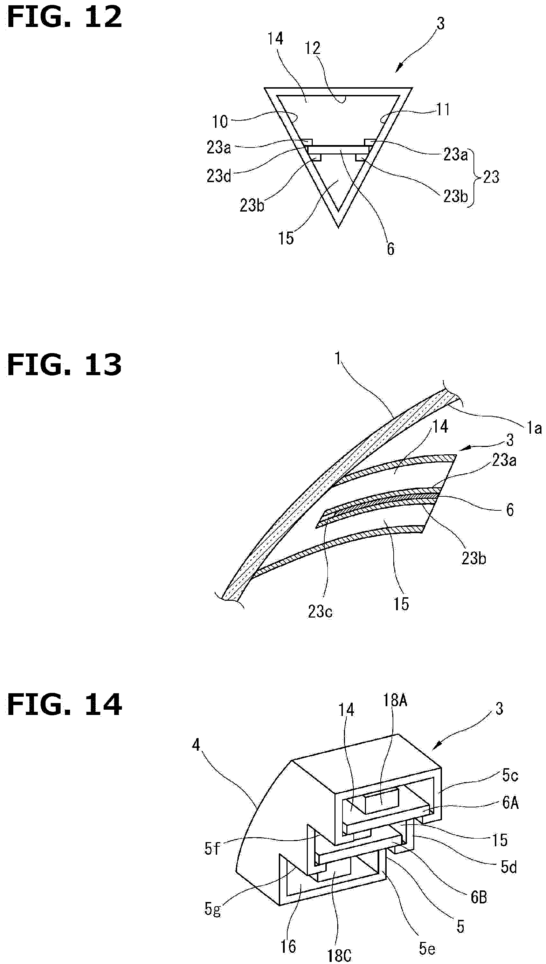

In addition, as shown in FIG. 13, in the fourth embodiment, when viewed from the side of the vehicle body, the cylindrical bracket 3 is gently curved. That is, the top surface side inner wall 12 is formed in the shape of a curved surface protruding upward, and the ridgeline of the lower end that is the apex is a curved line also protruding upward. In other words, it is curved so as to extend along the vehicle cabin interior-side surface 1a of the windshield 1.

In this way, the whole bracket 3 is curved, and, in corresponding to this, the guide rails 23 are curved along the curvature of bracket 3.

The second opening portion 5 opened toward the vehicle cabin interior side that is the opposite side of the first opening portion 4 is opened such that the plate member 6 can be inserted and drawn out. In addition, the second opening portion 5 is slightly inclined with respect to the vertical direction so as to be inclined in the same inclination direction as that of the windshield 1. In the illustrated example, the opening edge of the second opening portion 5 is inclined along one inclined plane.

The plate member 6 is inserted from the second opening portion 5 side along the grooves 23d of the guide rails 23, and is held by a pair of the side surface side inner walls 10, 11. The plate member 6 inserted from the second opening portion 5 side is positioned in the longitudinal direction in a manner that the distal end edge of the plate member 6 abuts on the terminal portions 23c of the guide rails 23.

In addition, the plate member 6 may be, in advance, formed in a curved shape along the curvature of the guide rails 23. Alternatively, the plate member 6 may be formed to have flexibility so as to be curved by inserting the plate member 6 having a flat plate shape into the guide rails 23.

In this way, by the plate member 6 disposed inside the bracket 3, the internal space of the triangular bracket 3 is partitioned into two device housing spaces 14, 15. Then, similar to the first embodiment, electronic devices 18 which are not shown are housed in the respective device housing spaces 14, 15.

Next, a bracket 3 in a fifth embodiment will be explained while referring to FIG. 14 to FIG. 16. In this embodiment, similar to the third embodiment, two plate members 6A, 6B are used.

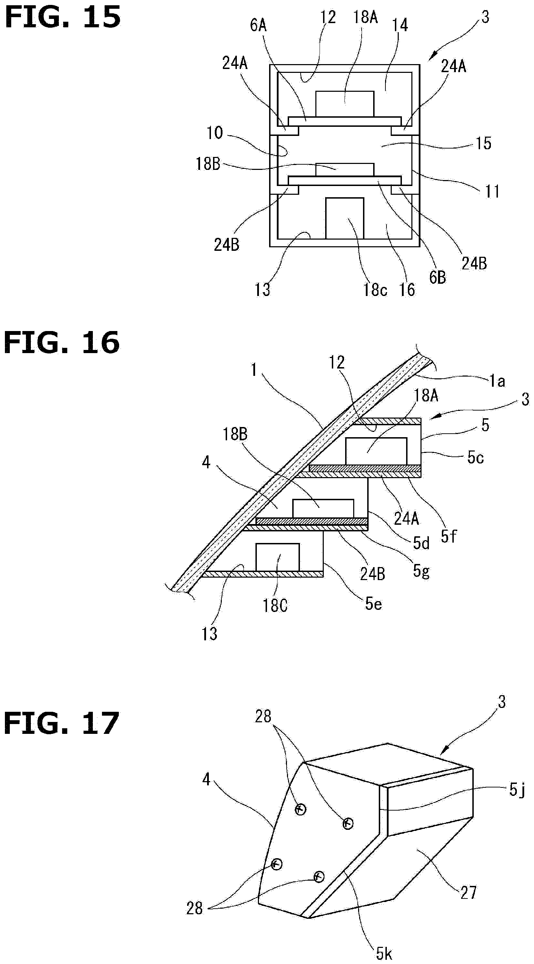

As shown in FIG. 15, the bracket 3 in the fifth embodiment is formed in the shape of a rectangular cross-section tube. Specifically, it is formed in a rectangular cross-section tube elongated in the vertical direction. The bracket 3 includes a pair of right and left side surface side inner walls 10, 11, a top surface side inner wall 12 positioned on the upper side in the vertical direction, and a bottom surface side inner wall 13 positioned on the lower side in the vertical direction. That is, the upper ends of a pair of the side surface side inner walls 10, 11 are connected to each other by the top surface side inner wall 12, and the lower ends of a pair of the side surface side inner walls 10, 11 are connected to each other by the bottom surface side inner wall 13.

The first opening portion 4 of the bracket 3 has a three-dimensional shape along the vehicle cabin interior-side surface 1a of the windshield 1, and is joined to the vehicle cabin interior-side surface 1a of the windshield 1 by using a preferable joining technique. With this, the first opening portion 4 is covered with the vehicle cabin interior-side surface 1a of the windshield 1.

In a state of being attached to the windshield 1, the top surface side inner wall 12 and the bottom surface side inner wall 13 of the bracket 3 extend along the horizontal direction of the vehicle body.

The second opening portion 5 opened toward the vehicle cabin interior side that is the opposite side of the first opening portion 4 is opened such that the plate members 6A, 6B can be inserted and drawn out. Here, as shown in FIG. 16, the second opening portion 5 is formed in a stair-like shape including three standing-up sides 5c, 5d, 5e and two front-back-direction edges 5f, 5g corresponding to the two plate members 6A, 6B. In other words, the area on the second opening portion 5 side of a pair of the side surface side inner walls 10, 11 is cut in a stair-like shape. Each of the standing-up sides 5c, 5d, 5e extends along the vertical direction of the vehicle body. Each of the front-back-direction edges 5f, 5g extends along the horizontal direction of the vehicle body. That is, each of the front-back-direction edges 5f, 5g extends in parallel to the top surface side inner wall 12 and the bottom surface side inner wall 13. As compared with the standing-up side 5e positioned on the uppermost side, the standing-up side 5d positioned in the middle is positioned on the front side of the vehicle body, and the standing-up side 5c positioned on the lowermost side is positioned more on the front side than the standing-up side 5d, so as to have a stair-like shape along the inclination of the first opening portion 4 (in other words, the inclination of the windshield 1).

Each of the side surface side inner walls 10, 11 is provided with guide rails 24A, 24B for holding the plate members 6A, 6B in straight lines. Each of the guide rails 24A, 24B protrudes from the surfaces of the side surface side inner walls 10, 11 toward the inside of the bracket 3. As shown in FIG. 15, the guide groove 24A of one side surface side inner wall 10 and the guide groove 24A of the other side surface side inner wall 11 are positioned so as to face each other, and the guide groove 24B of one side surface side inner wall 10 and the guide groove 24B of the other side surface side inner wall 11 are positioned so as to face each other. In the cross section of the bracket 3, the guide grooves 24A are positioned close to the top surface side inner wall 12, and the guide grooves 24B are positioned close to the bottom surface side inner wall 13. That is, the guide grooves 24A are positioned on the relatively upper side.

In particular, in the present embodiment, as shown in FIG. 16, in correspondence with the side surface side inner walls 10, 11 and the second opening portion 5 formed in stair-like shapes, the guide rails 24A, 24B are provided at height positions along the front-back-direction edges 5f, 5g respectively.

The plate members 6A, 6B are inserted from the second opening portion 5 side along corresponding ones of the upper surfaces of the guide rails 22A, 22B, and are held by a pair of the side surface side inner walls 10, 11. The plate members 6A, 6B inserted from the second opening portion 5 side are positioned in the longitudinal direction in a manner that the distal end edges of the plate members 6A, 6B abut on the windshield 1. In addition, each of the guide rails 24A, 24B may be provided with, on the first opening 4 side, a terminal portion. In one preferable example, the length of the plate member 6A is equal to that of the plate member 6B. That is, the dimension of the stair-like shape of the second opening portion 5 is set, such that the length of the guide rails 24A is equal to that of the guide rails 24B.

In the fifth embodiment, similar to the third embodiment, the two plate members 6A, 6B are arranged at different height positions in the inside of the bracket 3, and the internal space of the bracket 3 is partitioned into three device housing spaces 14, 15, 16. Then, electronic devices 18 are housed into the respective device housing spaces 14, 15, 16. Specifically, an electronic device 18A is housed in the device housing space 14 positioned on the upper side, an electronic device 18B is housed in the device housing space 15 positioned in the middle, and an electronic device 18C is housed in the device housing space 16 positioned on the lower side. The electronic devices 18A, 18B are respectively mounted on the plate members 6A, 6B, and the electronic device 18C is mounted on the bottom surface side inner wall 13 of the bracket 3.

In addition, although, in the illustrated example, the second opening portion 5 formed in a stair-like shape is opened toward the vehicle cabin interior side, a detachable or openable cover may be provided so as to cover the second opening portion 5 after the insertion of the plate members 6A, 6B.

Next, a bracket 3 in a sixth embodiment will be explained while referring to FIG. 17 to FIG. 19. In this embodiment, similar to the third embodiment and the fifth embodiment, two plate members 6A, 6B are used.

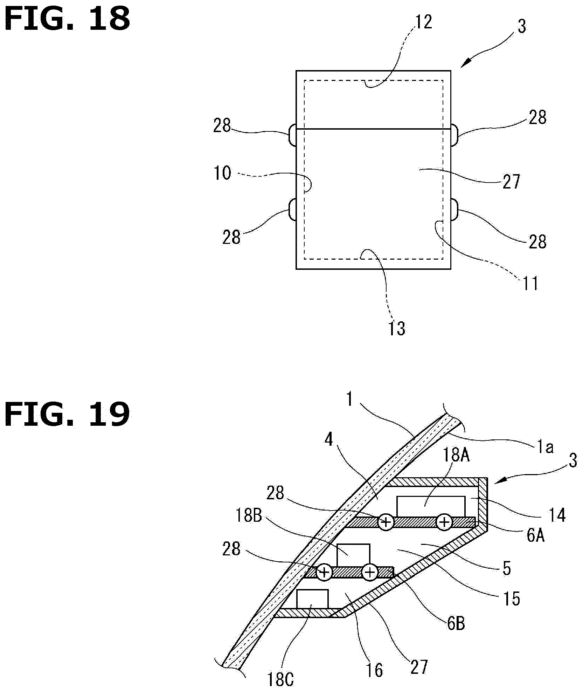

As shown in FIG. 18, the bracket 3 in the sixth embodiment is formed in the shape of a rectangular cross-section tube. Specifically, it is formed in a rectangular cross-section tube elongated in the vertical direction. The bracket 3 includes a pair of right and left side surface side inner walls 10, 11, a top surface side inner wall 12 positioned on the upper side in the vertical direction, and a bottom surface side inner wall 13 positioned on the lower side in the vertical direction. That is, the upper ends of a pair of the side surface side inner walls 10, 11 are connected to each other by the top surface side inner wall 12, and the lower ends of a pair of the side surface side inner walls 10, 11 are connected to each other by the bottom surface side inner wall 13.

The first opening portion 4 of the bracket 3 has a three-dimensional shape along the vehicle cabin interior-side surface 1a of the windshield 1, and is joined to the vehicle cabin interior-side surface 1a of the windshield 1 by using a preferable joining technique. With this, the first opening portion 4 is covered with the vehicle cabin interior-side surface 1a of the windshield 1.

In a state of being attached to the windshield 1, the top surface side inner wall 12 and the bottom surface side inner wall 13 of the bracket 3 extend along the horizontal direction of the vehicle body.

The second opening portion 5 opened toward the vehicle cabin interior side that is the opposite side of the first opening portion 4 is opened such that the plate members 6A, 6B can be inserted and drawn out, and is attached with a detachable cover 27 so as to cover the second opening portion 5 after the insertion of the plate members 6A, 6B.

As shown in FIG. 19, the second opening portion 5 is formed along a vertical surface 5j on the upper side which extends along the vertical direction of the vehicle body and an inclined surface 5k on the lower side which is inclined in the same inclination direction as that of the windshield 1. The boundary between the vertical surface 5j and the inclined surface 5k is positioned corresponding to the height position at which the plate member 6A on the upper side is supported. That is, the vertical surface 5j is positioned more on the upper side than the plate member 6A, and the inclined surface 5k is positioned more on the lower side than the plate member 6A.

The cover 27 is formed so as to correspond to the shape of the second opening portion 5, and is formed in a shape bent at a predetermined angle at the boundary between the vertical surface 5j and the inclined surface 5k so as to extend along the vertical surface 5j and the inclined surface 5k.

After being inserted into the bracket 3, the plate members 6A, 6B are each fixed with screws 28 screwed from the side of the bracket 3. That is, the plate members 6A, 6B are held by a pair of the side surface side inner walls 10, 11 via the screws 28. In the illustrated example, each of the plate members 6A, 6B is fixed and supported with two screws 28 on the right and left sides, namely, four screws 28 in total. In addition, in order to perform the positioning of the plate members 6A, 6B before being fixed with the screws, appropriate protrusions, grooves or the like may be added to the side surface side inner walls 10, 11.

In the illustrated example, the length of the plate member 6B positioned relatively lower side is formed shorter than that of the plate member 6A positioned relatively upper side. The length of each of the plate members 6A, 6B is set corresponding to the distance between the first opening portion 4 and the second opening portion 5.

In the sixth embodiment, similar to the third embodiment and the fifth embodiment, the two plate members 6A, 6B are arranged at different height positions in the inside of the bracket 3, and the internal space of the bracket 3 is partitioned into three device housing spaces 14, 15, 16. Then, electronic devices 18 are housed into the respective device housing spaces 14, 15, 16. Specifically, an electronic device 18Ais housed in the device housing space 14 positioned on the upper side, an electronic device 18B is housed in the device housing space 15 positioned in the middle, and an electronic device 18C is housed in the device housing space 16 positioned on the lower side. The electronic devices 18A, 18B are respectively mounted on the plate members 6A, 6B, and the electronic device 18C is mounted on the bottom surface side inner wall 13 of the bracket 3.

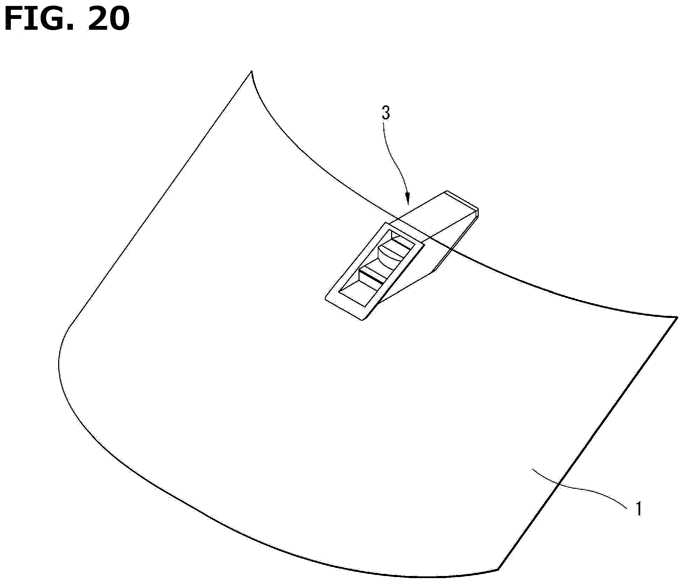

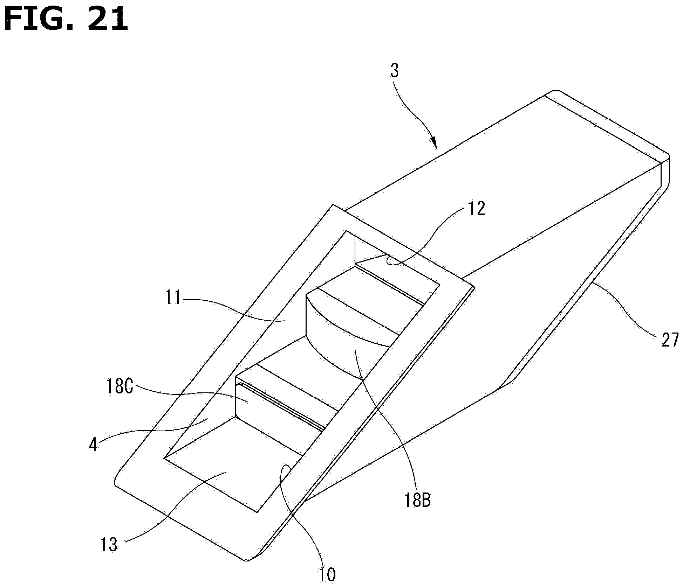

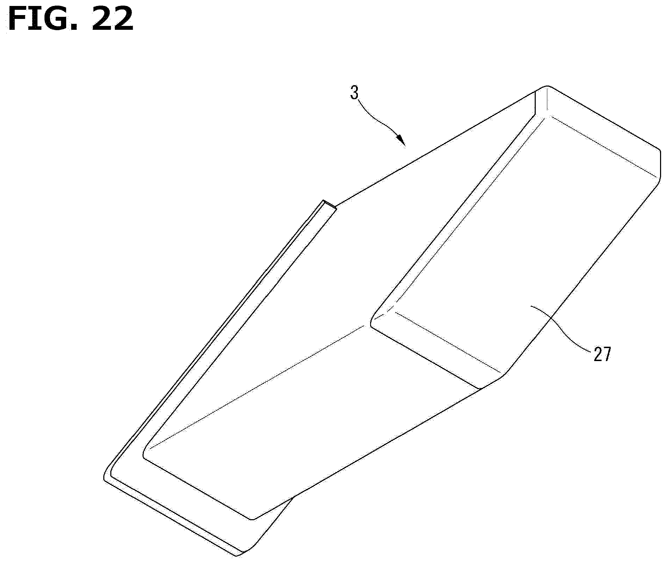

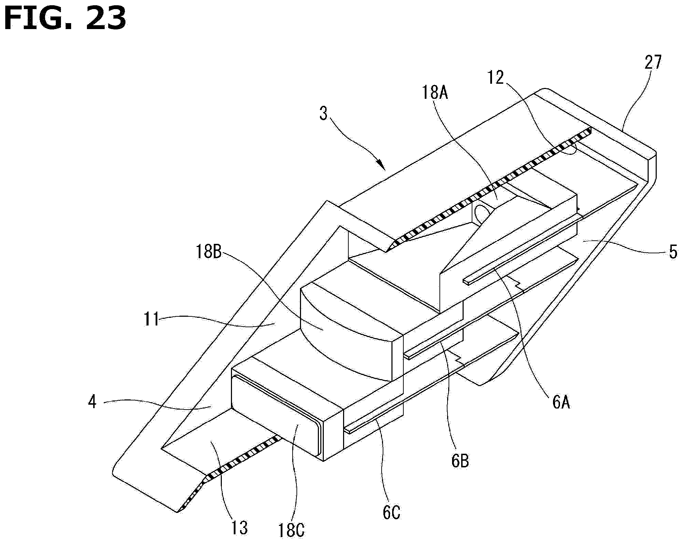

Next, a bracket 3 in a seventh embodiment will be explained while referring to FIG. 20 to FIG. 26. In this embodiment, three plate members 6A, 6B, 6C are used.

The bracket 3 in the seventh embodiment is formed in the shape of a rectangular cross-section tube. Specifically, it is formed in a vertically long and narrow rectangular cross-section tube. The bracket 3 includes a pair of right and left side surface side inner walls 10, 11, a top surface side inner wall 12 positioned on the upper side in the vertical direction, and a bottom surface side inner wall 13 positioned on the lower side in the vertical direction. That is, the upper ends of a pair of the side surface side inner walls 10, 11 are connected to each other by the top surface side inner wall 12, and the lower ends of a pair of the side surface side inner walls 10, 11 are connected to each other by the bottom surface side inner wall 13.

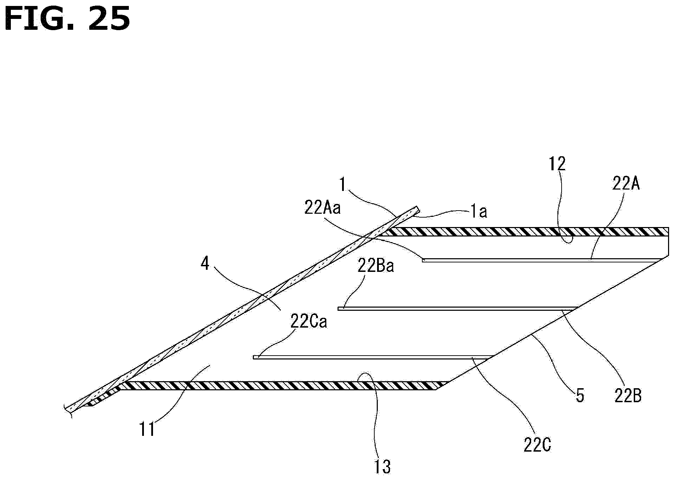

Guide grooves 22A, 22B, 22C for holding the plate members 6A, 6B, 6C are provided to a pair of each of the side surface side inner walls 10, 11 in straight lines. Each of the guide grooves 22A, 22B, 22C is recessed from the surfaces of the side surface side inner walls 10, 11 in a rectangular shape in cross section. The guide grooves 22A, 22B, 22C of one side surface side inner wall 10 and the guide grooves 22A, 22B, 22C of the other side surface side inner wall 11 are positioned so as to face each other. In addition, as shown in FIG. 25, the guide grooves 22A, 22B, 22C are each arranged in parallel to the top surface side inner wall 12 and the bottom surface side inner wall 13. One ends in the longitudinal direction of the guide grooves 22A, 22B, 22C are opened toward the vehicle cabin interior side at the second opening portion 5 of the bracket 3. On the other hand, the other ends in the longitudinal direction of the guide grooves 22A, 22B, 22C have closed shapes as terminal portions 22Aa, 22Ba, 22Ca at the positions in the vicinity of the first opening portion 4 of the bracket 3.

The first opening portion 4 of the bracket 3 has a three-dimensional shape inclined along the vehicle cabin interior-side surface 1a of the windshield 1, and is joined to the vehicle cabin interior-side surface 1a of the windshield 1 by using a preferable joining technique. With this, the first opening portion 4 is covered with the vehicle cabin interior-side surface 1a of the windshield 1.

In a state of being attached to the windshield 1, the top surface side inner wall 12 and the bottom surface side inner wall 13 of the bracket 3 extend along the horizontal direction of the vehicle body.

The second opening portion 5 opened toward the vehicle cabin interior side that is the opposite side of the first opening portion 4 is opened such that the plate members 6A, 6B, 6C can be inserted and drawn out. In addition, the second opening portion 5 is formed along one plane inclined with respect to the vertical direction of the vehicle body at an angle approximating to the angle of the inclination of the windshield 1.

In this way, since the first opening portion 4 and the second opening portion 5 of the bracket 5 are similarly inclined, in the illustrated example, the three guide grooves 22A, 22B, 22C have the same length.

The second opening portion 5 is attached with a cover 27 so as to be detachable. After the insertion of the plate members 6A, 6B, 6C into the bracket 3, by attaching the cover 27, the second opening portion 5 is covered.

The plate members 6A, 6B, 6C are inserted from the second opening portion 5 side along corresponding ones of the guide grooves 22A, 22B, 22C and are held by a pair of the side surface side inner walls 10, 11. Here, the length of each of the three plate members 6A, 6B, 6C corresponds to that of a corresponding one of the guide grooves 22A, 22B, 22C, and consequently, in a state in which the cover 27 is attached, the plate members 6A, 6B, 6C are surely positioned in the longitudinal direction in the guide grooves 22A, 22B, 22C.

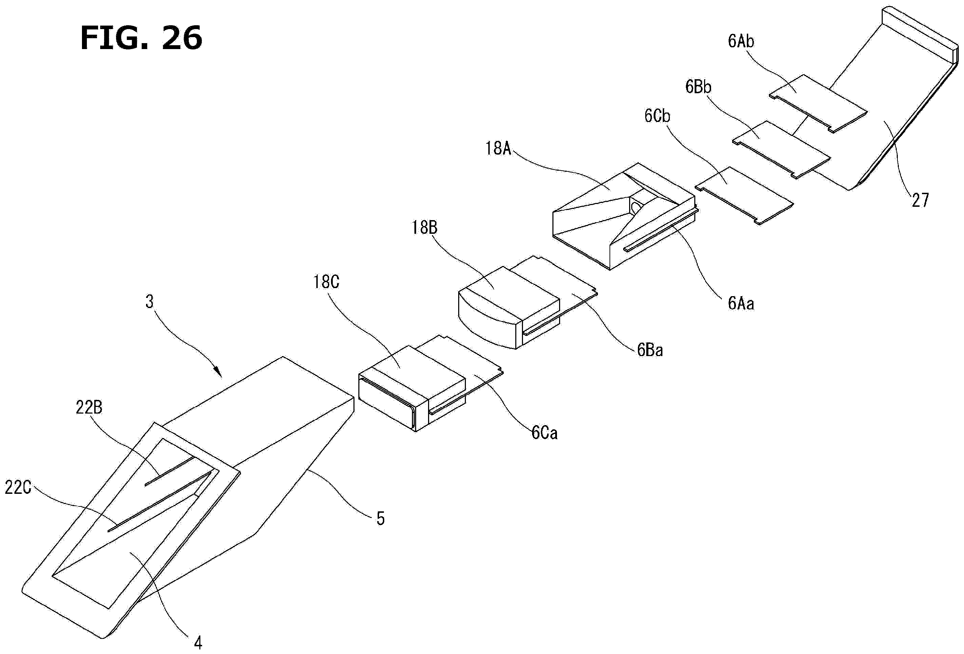

Here, as shown in FIG. 26, in this embodiment, the plate members 6A, 6B, 6C are respectively divided into body parts 6Aa, 6Ba, 6Ca on the first opening portion 4 side and spacer parts 6Ab, 6Bb, 6Cb on the second opening portion 5 side. Then, the body parts 6Aa, 6Ba, 6Ca and the spacer parts 6Ab, 6Bb, 6Cb are arranged in series respectively and are inserted into the guide grooves 22A, 22B, 22C respectively. In addition, each of the plate members 6A, 6B, 6C may be formed as an integrated member without being divided into the body parts 6Aa, 6Ba, 6Ca and the spacer parts 6Ab, 6Bb, 6Cb.

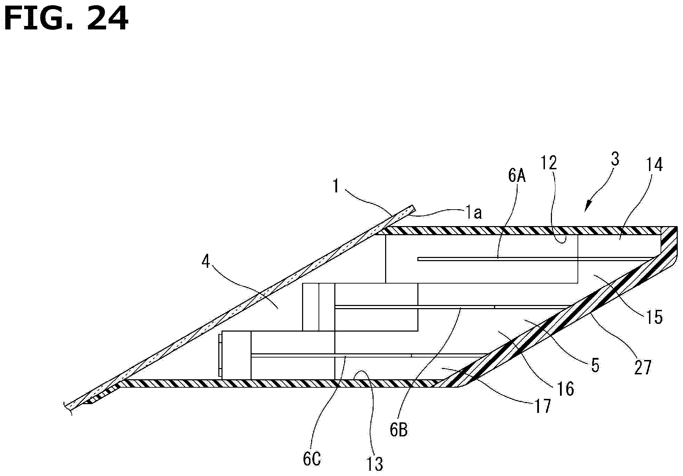

In the seventh embodiment, the three plate members 6A, 6B, 6C are arranged at different height positions in the inside of the bracket 3, and the internal space of the bracket 3 is partitioned into four device housing spaces 14, 15, 16, 17 (see FIG. 24).

In addition, in the seventh embodiment, electronic devices 18A, 18B, 18C are mounted in areas on the front side of the plate members 6A, 6B, 6C. Accordingly, each of the electronic devices 18A, 18B, 18C is held at a position relatively close to the windshield 1. In one embodiment, the electronic device 18A is a camera, the electronic devices 18B, 18C each are a radar, an infrared laser or a communication module.

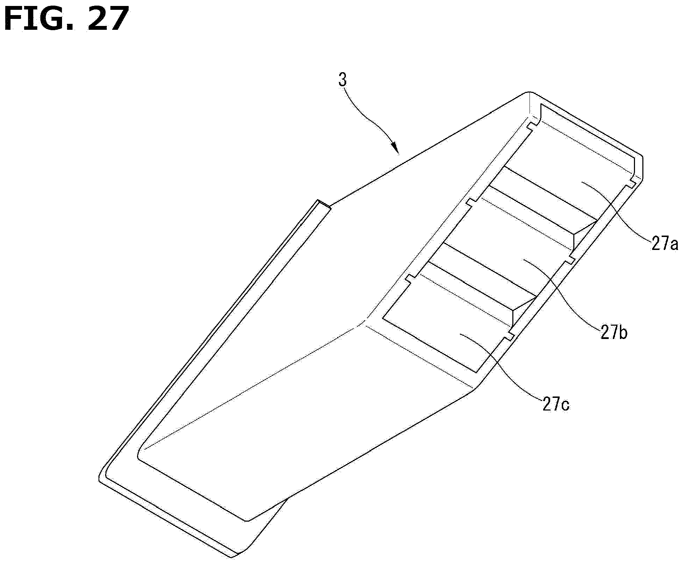

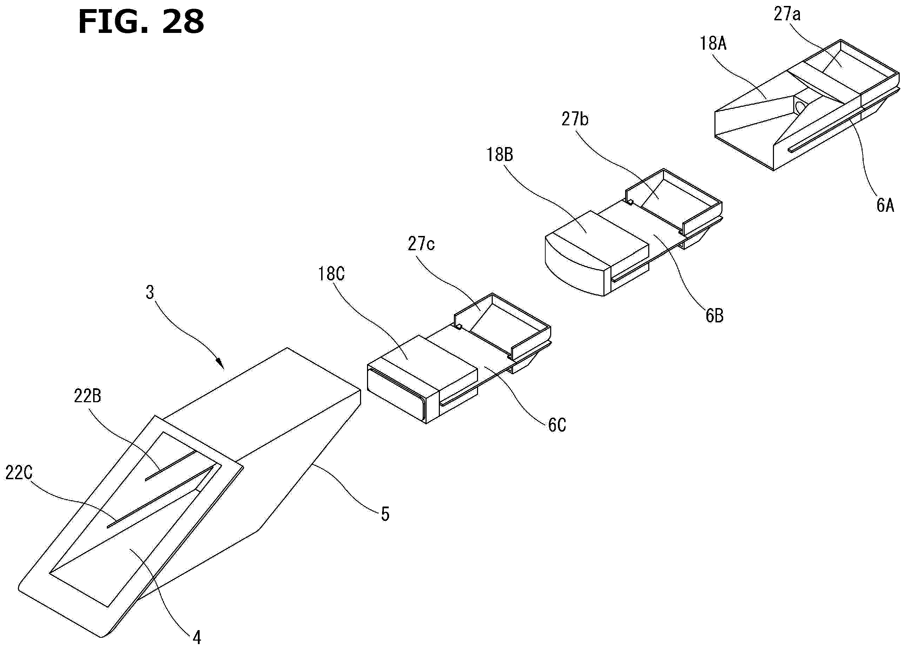

Next, FIG. 27 and FIG. 28 show a bracket 3 in an eighth embodiment in which a part of the seventh embodiment is changed.

In the eighth embodiment, instead of the cover 27 in the seventh embodiment, the spacer parts 6Ab, 6Bb, 6Cb that are parts of the plate members 6A, 6B, 6C are provided with cover portions 27a, 27b, 27c respectively. For example, by using a synthetic resin material, the cover portions 27a, 27b, 27c can be formed integrally with the spacer parts 6Ab, 6Bb, 6Cb. Alternatively, the cover portions 27a, 27b, 27c are formed separately, and are attached to the spacer parts 6Ab, 6Bb, 6Cb respectively.

In a state in which the plate members 6A, 6B, 6C are attached to the bracket 3, as shown in FIG. 27, the three cover portions 27a, 27b, 27c are continued along the inclination of the second opening portion 5 so as to cover the second opening portion 5 with actually no gap.

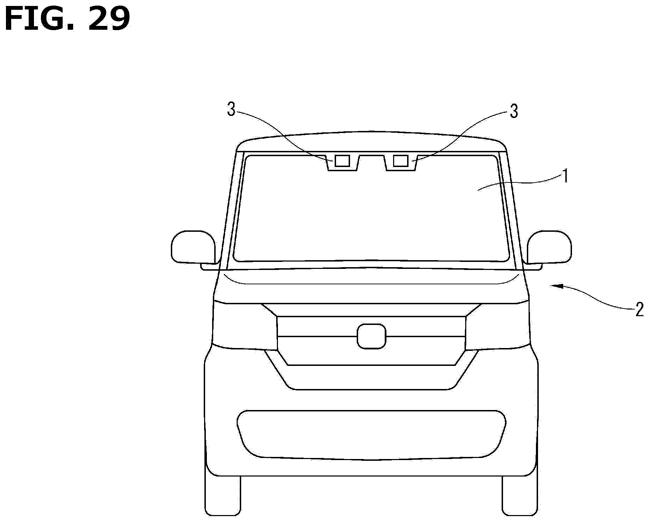

Next, FIG. 29 shows an automobile 2 in which two brackets 3 are mounted on the upper side of the windshield 1. In this way, a plurality of brackets 3 can also be provided, and it is possible to gather and hold a larger number of electronic devices 18.

As a method for manufacturing the windshield 1 equipped with the bracket 3, the method includes the steps of: producing a windshield 1; producing a bracket 3 in each of the above embodiments; joining a first opening portion 4 of the bracket 3 to a vehicle cabin interior-side surface 1a of the windshield 1, and providing the windshield 1 equipped with the bracket; attaching the windshield 1 equipped with the bracket to a vehicle body; and inserting a plate member 6 mounting an electronic device 18 into the bracket 3 from a second opening portion 5 of the bracket 3, and holding the bracket 3 by a pair of side surface side inner walls 10, 11.

For example, it is possible that electronic devices 18 such as a camera are combined afterward and optionally, and are held by the bracket 3.

In addition, although the embodiments in each of which the bracket 3 is attached to the windshield 1 have been mainly explained, the bracket 3 can be similarly disposed on a glass window other than the windshield 1.

## Claims

1. A glass window equipped with a bracket, comprising:
a glass window for a vehicle;
a cylindrical bracket held by the glass window; and
a plate member held by the bracket,
wherein the bracket includes:
a first opening portion covered with a vehicle cabin interior-side surface of the glass window for the vehicle;
a second opening portion opened such that the plate member can be inserted and drawn out, on an opposite side of the first opening portion; and
a pair of side surface side inner walls, and
wherein the plate member is held by the pair of the side surface side inner walls so as to partition an internal space of the bracket into upper side and lower side device housing spaces.

2. The glass window equipped with the bracket according to claim 1, wherein a plurality of the plate members are included, and the plurality of the plate members are arranged at respective different height positions of the bracket.

3. The glass window equipped with the bracket according to claim 1 or 2, wherein the side surface side inner walls are provided with guides for holding the plate member.

4. The glass window equipped with the bracket according to claim 3, wherein the guides have rail shapes.

5. The glass window equipped with the bracket according to claim 3, wherein the guides are formed by grooves provided in the side surface side inner walls.

6. The glass window equipped with the bracket according to any of claims 3 to 5, wherein the guides are provided with terminal portions on a first opening portion side.

7. The glass window equipped with the bracket according to any of claims 1 to 6, wherein the bracket is formed in a shape of a polygonal cross-section tube.

8. The glass window equipped with the bracket according to any of claims 1 to 7, wherein an electronic device is mounted on the plate member.

9. The glass window equipped with the bracket according to any of claims 1 to 8, wherein an opening surface of the first opening portion has a three-dimensional shape along the vehicle cabin interior-side surface of the vehicle glass window.

10. The glass window equipped with the bracket according to any of claims 1 to 9, wherein an opening surface of the second opening portion is formed along a vertical direction of a vehicle body.

11. The glass window equipped with the bracket according to any of claims 1 to 9, wherein the bracket is provided with a detachable or openable cover which covers the second opening portion.

12. The glass window equipped with the bracket according to any of claims 1 to 11, wherein a bottom surface side inner wall of the bracket extends along a horizontal direction of a vehicle body.

13. The glass window equipped with the bracket according to any of claims 1 to 12, wherein a top surface side inner wall of the bracket extends along a horizontal direction of a vehicle body.

14. The glass window equipped with the bracket according to any of claims 1 to 13, wherein the plate member is held along a horizontal direction of a vehicle body.

15. The glass window equipped with the bracket according to any of claims 1 to 14, wherein the plate member is fixed to the bracket with a screw.

16. A bracket having a cylindrical shape and held by a glass window for a vehicle, comprising:
a first opening portion covered with a vehicle cabin interior-side surface of the glass window for the vehicle;
a second opening portion opened such that a plate member can be inserted and drawn out, on an opposite side of the first opening portion; and
a pair of side surface side inner walls,
wherein the pair of each of the side surface side inner walls is provided with a holding portion which holds the plate member for partitioning an internal space of the bracket into upper side and lower side device housing spaces.

17. A method for manufacturing a glass window equipped with a bracket, comprising the steps of:
producing a glass window for a vehicle;
producing a cylindrical bracket having a first opening portion and a second opening portion at respective end portions thereof and a pair of side surface side inner walls;
joining the first opening portion of the bracket to a vehicle cabin interior-side surface of the glass window for the vehicle, and providing the glass window equipped with the bracket;
attaching the glass window equipped with the bracket to a vehicle body; and
inserting a plate member mounting an electronic device into the bracket from the second opening portion, and holding the plate member by the pair of the side surface side inner walls.

18. The glass window equipped with the bracket according to claim 1, wherein the bracket is formed in a shape of a rectangular cross-section tube,
wherein the first opening portion is inclined along an inclination of the glass window,
wherein the second opening portion is formed in a stair-like shape along an inclination of the first opening portion, the stair-like shape being formed of a plurality of standing-up sides and front-back-direction edges,
wherein guide rails are provided along the front-back-direction edges, and
wherein the plate member is held on each of corresponding ones of the guide rails.
